# EUROPÄISCHE PATENTSCHRIFT

(11) **EP 1 202 037 B1**
(45) Veröffentlichungstag und Bekanntmachung des Hinweises auf die Patenterteilung: **21.04.2004**
(21) Anmeldenummer: 01124093.4
(22) Anmeldetag: 10.10.2001
(51) Int. Cl.: G01L 25/00, G01L 5/28, G01M 17/007

(54) **Mobile Einrichtung zum Kalibrieren eines Prüfstandes für Fahrzeugbremsen**
Mobile device for calibrating a test bench for vehicle brakes
Dispositif mobile pour calibrer un banc d'essai de freinage pour véhicule

(30) Priorität: 27.10.2000 DE 10053513
(43) Veröffentlichungstag der Anmeldung: 02.05.2002
(73) Patentinhaber: TÜV Kraftfahrt GmbH, Unternehmensgruppe TÜV Rheinland/Berlin-Brandenburg, 51105 Köln (DE)
(72) Erfinder: Heuser, Dr. Gerd, 51069 Köln (DE); Kampmann, Thomas, 41470 Neuss (DE)
(74) Vertreter: Patentanwälte Maxton & Langmaack

(56) Entgegenhaltungen:
- EP-A- 0 634 638
- DE-C- 4 135 766
- US-A- 4 150 559

## Beschreibung

Die Erfindung betrifft eine mobile Einrichtung zum Kalibrieren von Prüfständen für Fahrzeugbremsen.

Zur Überprüfung der Bremsen an Kraftfahrzeugen sind unterschiedliche Typen von Prüfständen bekannt, beispielsweise ein Rollenbremsprüfstand mit Wirkleistungsmessung, ein Rollenbremsprüfstand mit Drehmomentmessung und ein Plattenbremsprüfstand. Um nun eine zuverlässige Aussage über den Zustand der zu prüfenden Fahrzeugbremsen machen zu können, ist es erforderlich, derartige Bremsprüfstände regelmäßig zu überprüfen und zu kalibrieren, damit innerhalb einer vorgegebenen Toleranz die Gewähr dafür gegeben ist, daß die auf die Rollen bzw. die Platten von der Fahrzeugbremse aufgebrachte tatsächliche Bremskraft auch mit der vom Prüfstand angezeigten Bremskraft übereinstimmt.

Bei den heute in erster Linie üblichen Rollenbremsprüfständen mit Drehmomentmessung erfolgt die Kalibrierung dadurch, daß ohne Fahrzeug, d.h. also im Leerzustand, dem Drehmomentmeßglied des Prüfstandes durch ein zusätzliches Prüfmittel ein Prüfdrehmoment aufgeprägt wird. Diese Anordnung ist praktisch als statisch zu bezeichnen, da die dynamischen Einflüsse, Schleppungseinflüsse aus den übrigen Bauteilen des Prüfstandes, wie Lager, Getriebe etc. allenfalls zum Teil durch das Prüfdrehmoment erfaßt werden und kaum bewertbar sind. Daneben ist dieses Kalibrierverfahren sehr aufwendig, da zumindest eine Teildemontage des Bremsenprüfstandes erforderlich ist.

Aus DE-C-41 35 766 ist eine mobile Prüfeinrichtung bekannt, die gebildet wird durch ein Fahrzeug, das eine Prüfachse mit zwei Rädern aufweist, bei dem wenigstens ein Rad mit einer Meßbremse versehen ist, die mit einer Anzeigeeinrichtung für die wirksame Radbremskraft in Verbindung steht. Diese bekannte Einrichtung hat den Vorteil, daß der zu kalibrierende Prüfstand nicht demontiert zu werden braucht, sondern unter realen Betriebsbedingungen kalibriert werden kann. Bei zu prüfenden Rollenprüfständen wird diese Einrichtung mit ihrer die Meßbremsen tragenden Achse auf den Bremsrollen positioniert, die in üblicher Weise in Betrieb gesetzt werden. Dann wird über die Meßbremse auf wenigestens eines Räder eine definierte Bremskraft aufgebracht, die bis zum Erreichen des vorgegebenen Sollwertes gesteigert wird. Die gemessene Sollwertanzeige der Einrichtung wird nun mit der Istanzeige des Bremsprüfstandes verglichen. Um Zufälligkeiten auszuschalten, wird die Messung mehrfach durchgeführt und die jeweils sich ergebenden Sollwert- und Istwertmessungen gemittelt und die sich hieraus ergebende Abweichung bestimmt. Hierdurch ist für Rollenprüfstände die Möglichkeit einer betriebsnahen Prüfung gegeben.

Mit Hilfe einer derartigen als Fahrzeug ausgerüsteten Einrichtung besteht in gleicher Weise die Möglichkeit, einen Plattenprüfstand zu kalibrieren, da die über die mit den Meßbremsen versehenen Räder auf die Platte aufgebrachten Kräfte für den Vergleich der Anzeigen von Sollwert (Bremskraft der Meßbremse) und Istwert (vom Prüfstand angezeigte Bremskraft) verglichen werden können und so auch eine Bewertung eines Plattenprüfstands möglich ist.

Der Erfindung liegt die Aufgabe zugrunde, eine Einrichtung der vorstehend beschriebenen Art zu verbessern, um aus der Lagerung der Meßbremse herrührende Fehlereinflüsse noch zu minimieren und die Genauigkeit zu steigern.

Diese Aufgabe wird für eine mobile Einrichtung zum Kalibrieren eines Fahrzeugbremsprüfstandes erfindungsgemäße dadurch gelöst, daß an einem Fahrzeug eine Prüfachse mit zwei Rädern vorhanden ist, an der wenigstens ein Rad mit einer als Radbremse ausgebildeten Meßbremse versehen ist, die mit einer Anzeigeeinrichtung für die jeweils wirksame Radbremskraft in Verbindung steht und bei der der Bremssattel der Meßbremse an einem fest mit der Achse verbundenen Träger angeordnet ist, wobei der Träger als Kraftmeßeinrichtung derart ausgebildet ist, dass durch ihn die Reaktionskräfte der Meßbremse über elastische Verformungen des Trägers als Bremskraft erfassbar sind. Dadurch, daß der fest mit der Achse verbundene Träger für den Bremssattel unmittelbar als Kraftmeßeinrichtung ausgebildet ist und damit bewegliche, mit einem Lagerspiel versehene Teile eliminiert sind, ergibt sich eine Reduzierung von Störeinflüssen. Als Radbremse wird bevorzugt eine Scheibenbremse eingesetzt. Aber auch die Verwendung einer Trommelbremse oder einer Wirbelstrombremse als Radbremse ist zweckmäßig.

Der fest mit dem Bremssattel einerseits und der Achse andererseits verbundene Träger kann hierbei so ausgebildet werden, daß über die Kraftmeßrichtung praktisch immer die zwischen Bremsbelag und Bremsscheibe wirkende resultierende Reibkraft erfaßt werden kann. Übliche Reibbeläge für Scheibenbremsen weisen das Phänomen auf, daß durch Temperatureinflüsse, aber auch durch temperatur- oder verschleißbedingten Scheibenverzug während des Bremsvorganges der "Angriffspunkt" für die Reibkraft in bezug auf die Drehachse der Bremsscheibe sich in radialer Richtung verlagert. Da bei den gegebenen Scheibendurchmessern einerseits und der radialen Erstreckung der Bremsklötze andererseits bei konstanter Reibkraft für Meßzwecke nicht vernachlässigbare Änderungen des Bremsmomentes vorhanden sind, ist bei entsprechender Gestaltung des als Kraftmeßeinrichtung ausgebildeten Trägers die Möglichkeit gegeben, derartige Verlagerungen des "Angriffspunktes" für die resultierende Bremskraft durch eine Summenwertbildung weitestgehend zu eliminieren.

In zweckmäßiger Ausgestaltung ist vorgesehen, daß der Träger mit einer Anordnung (17) zur Erfassung kraftabhängiger Formänderungen versehen ist, die als Dehnmeßeinrichtung ausgebildet ist, mit der die Verformungen des Trägers als Bremskraft erfassbar sind.

In weiterer zweckmäßiger Ausgestaltung der Erfindung ist vorgesehen, daß der Träger mit einer Anordnung zur Erfassung kraftabhängiger Formänderungen versehen ist und in dem Bereich, in dem er mit dieser Anordnung versehen ist, in bezug auf die Krafteinleitung durch den Bremssattel als Biegebalken oder als Zug-Druck-Körper oder als Torsionskörper ausgebildet ist.

In weiterer Ausgestaltung der Erfindung ist vorgesehen, daß das mit der Meßbremse versehene Rad mit einer Bereifung mit hoher Haftfähigkeit und geringer Verformbarkeit versehen ist.

In weiterer vorteilhafter Ausgestaltung der Erfindung ist vorgesehen, daß bei einem zweiachsigen Fahrzeug eine mit Meßbremsen versehene Prüfachse vorgesehen ist, die relativ zum Fahrzeug zwischen den beiden Fahrzeugachsen bewegbar angeordnet ist und nur für den Kalibriervorgang über einen Stellantrieb mit dem Prüfstand in Berührung bringbar ist.

Die Erfindung wird anhand schematischer Zeichnungen eines Ausführungsbeispiels näher erläutert. Es zeigen:
- Fig. 1: das Grundprinizp des Prüfverfahrens,
- Fig. 2: eine Ausbildung einer Scheibenbremse als Meßbremse,
- Fig. 3: eine Ausführungsform eines Meßfahrzeugs mit Zusatzachse.

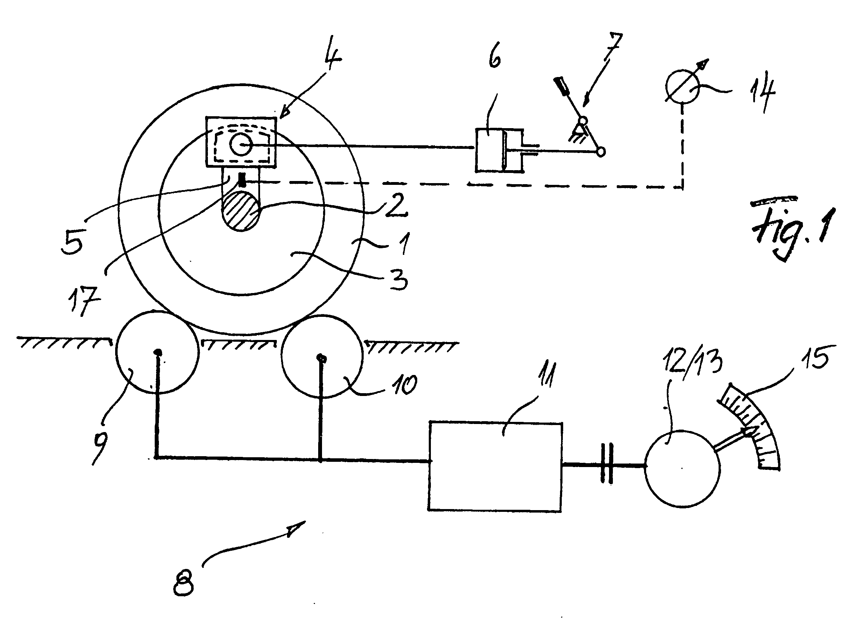

Bei der in Fig. 1 schematisch in einer Seitenansicht dargestellten Anordnung sind zwei Räder 1 an einer Achse 2 angeordnet, die durch eine nicht angetriebene Fahrzeugachse zweckmäßig durch eine mit einem Fahrzeug verbundene Zusatzachse gebildet wird. Die beiden Räder sind jeweils mit einer Scheibenbremse üblicher Bauart versehen. Jeder Bremsscheibe 3 ist ein Meßbremssattel 4 zugeordnet, der zusammen mit der Bremsscheibe 3 die Meßbremse bildet. Der Meßbremssattel ist mit dem Fahrzeug, vorzugsweise mit der Achse 2 über eine Halteeinrichtung 5 fest verbunden.

Zur Vereinfachung wird nachstehend der Begriff Meßbremse immer mit dem Bezugszeichen 4 gekennzeichnet, da der messende Teil im wesentlichen durch den Meßbremssattel 4 mit seiner Halteeinrichtung 5 gebildet wird. Die Meßbremse 4 ist beispielsweise in bekannter Bauform als hydraulisches Bremssystem ausgebildet, das aber von einem etwaigen Fahrzeugbremssystem unabhängig ist und das über eine entsprechende Druckerzeugungseinrichtung 6, die über eine entsprechende Stelleinrichtung, hier als Bremshebel 7 schematisch dargestellt, betätigbar ist. Aber auch ein Bremssystem mit pneumatischer elektrischer, elektromechanischer oder rein mechanischer Kraftübertragung kann eingesetzt werden.

Ein zu kalibrierender Rollenbremsprüfstand 8 weist je Fahrzeugrad zwei parallel nebeneinanderliegende gleichsinnig antreibbare Rollen 9, 10 auf. Zumindest die Rollen 9 werden hierbei über ein zwischengeschaltetes Getriebe 11 durch einen Elektromotor 12 angetrieben, dessen Reaktionsmoment über eine Drehmomentstütze 13 üblicher Bauart als Kraft im Anzeigegerät 15 zur Anzeige gebracht wird.

Um den Rollenbremsprüfstand 8 kalibrieren zu können, wird die Meßachse mit beiden Rädern auf den jeweils zugeordneten Prüfrollen 9, 10 mit Auflast positioniert. Die Prüfrollen 9, 10 werden dann mit einer vorgegebenen Drehzahl durch den Motor 12 angetrieben. Wird nun die Meßbremse 4 über die Druckerzeugungseinrichtung 6 betätigt, wird zum einen die an der Meßbremse 4 wirksame Bremskraft über eine Meßanordnung 17 an der Halteeinrichtung 5 erfaßt und am Anzeigeinstrument 14 zur Anzeige gebracht. Ist der Prüfstand einwandfrei, muß die am Anzeigeinstrument 14 der Meßbremse 4 angezeigte Bremskraft innerhalb vorgegebener Toleranzen mit der am Anzeigegerät 15 des Prüfstandes angezeigten Bremskraft übereinstimmen.

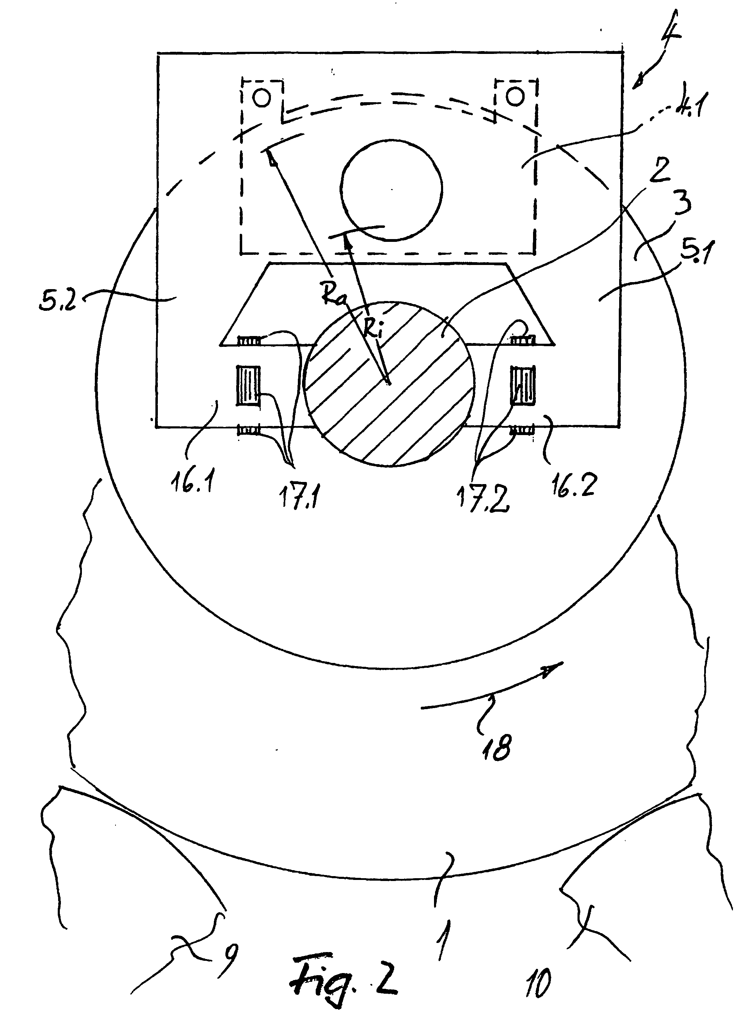

In Fig. 2 ist schematisch die Ausbildung der Bremse dargestellt. Hierzu ist an der Achse 2 der Meßbremssattel 4 fest angeordnet. Bei dem dargestellten Ausführungsbeispiel ist der Meßbremssattel 4 über zwei armartige Halteelemente 5.1 und 5.2 und zwei Meßträger 16.1 und 16.2 mit der Achse 2 fest verbunden. Die Meßträger 16.1 und 16.2 sind hierbei jeweils mit einer Anordnung 17.1 und 17.2 zur Erfassung kraftabhängiger Formänderungen an den Meßträgern, beispielsweise mit Meßstreifenanordnungen versehen, über die die kraftabhängigen Verformungen der Meßträger 16.1 und 16.2 zur Anzeige gebracht werden können.

Wird nun über die Rollen 9, 10 des Prüfstandes das zugehörige Rad 1 in Richtung des Pfeiles 18 in Drehung versetzt, und werden die nur angedeuteten Bremsklötze 4.1 über die Druckerzeugungseinrichtung 6 an der Bremsscheibe 3 mit einem vorgebbaren Anpreßdruck zur Anlage gebracht, dann läßt sich über die mit den Dehnmeßsstreifen 17.1, 17.2 der Meßträger 16.1 und 16.2 verbundenen Anzeigevorrichtung 14 die zwischen der Bremsscheibe 3 und dem Meßbremssattel 4 wirksame Reibkraft als Bremskraft ablesen.

Da bei dem gegebenen System die am Reifenumfang zwischen Rad und Prüfstandsrollen wirksame Bremskraft bei einem idealen System direkt-proportional zu der an den Trägern 16 über die Verformung gemessenen Kraft ist, muß für den praktischen Einsatz des Kalibriervorgangs ein Radreifen vorgesehen werden, der hinsichtlich Durchmesser, Laufflächenbeschaffenheit und Randlaufgenauigkeit eine ausreichende Konstanz aufweist, so daß der wirksame Reifenradius hinreichend genau vorgegeben werden kann. Hierzu ist es zweckmäßig, wenn die mit den Meßbremsen versehenen Räder 1 eine Vollgummibereifung aufweisen. Damit ist die Möglichkeit gegeben, die Räder 1 mit einer Auflast in der Größenordnung eines Fahrzeuggewichtes zu belasten, ohne daß sich der Reifendurchmesser nennenswert ändert.

Da infolge der eingangs beschriebenen Einflüsse durch Temperatur, Verschleiß etc. die "Angriffspunkt" einer als Resultierenden angenommenen Reibkraft in radialer Richtung "verändert", kann durch entsprechende Abstimmung der Geometrie und Anordnung der armartigen Halteelemente 5.1 und 5.2 einerseits und der Geometrie und Anordnung der damit verbundenen Meßträger 16.1 und 16.2 andererseits erreicht werden, daß bei gegebener, am Innenradius Rᵢ angreifender Reibkraft das gleiche Reibmoment erzeugt wird, wie bei Angriff dieser Reibkraft am Außenradius Rₐ. Damit kann praktisch ein "Summenwert" für das Reibmoment erfaßt werden und die Einflüsse wechselnder Eingriffsbedingungen durch ein "Wandern" des "Angriffspunktes" eliminiert werden.

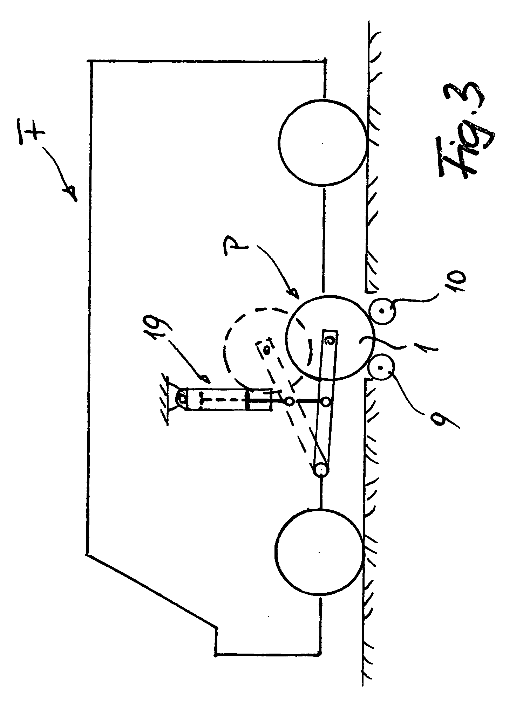

In Fig. 3 ist schematisch ein Ausführungsbeispiel für ein Prüffahrzeug F dargestellt. Bei diesem Fahrzeug ist in der Mitte zwischen beiden Fahrzeugachsen eine gesonderte Prüfachse P mit den speziellen Prüfrädern 1 vorgesehen, die über eine hydraulisch oder mechanisch betätigbare Hubeinrichtung 19 abgesenkt und angehoben werden kann.

Für den Kalibriereinsatz wird nun über die Hubeinrichtung 19 die Prüfachse nach unten verfahren, sobald das Fahrzeug gegenüber den Prüfrollen 9, 10 des Prüfstandes 8 entsprechend positioniert ist. Hierbei wird das Fahrzeug durch die Hubeinrichtung der Prüfachse so weit angehoben, bis die gewünschte Auflast zwischen der Prüfachse und den Rollen 9, 10 des Prüfstandes vorhanden ist. Durch die Anordnung der Prüfachse zwischen den beiden Fahrzeugachsen gelingt es, als Auflast praktisch des volle Fahrzeuggewicht auf die Prüfachse aufzubringen, da über die Hubeinrichtung das Fahrzeug so weit angehoben werden kann, daß von den Fahrzeugrädern das Fahrzeug gerade noch gegen ein Kippen gehalten wird.

Nach Abschluß der Kalibrierarbeit wird dann die Prüfachse wieder nach oben bewegt und außer Eingriff gebracht, so daß das Fahrzeug in üblicher Weise im Straßenverkehr bewegt werden kann.

## Patentansprüche

1. Mobile Einrichtung zum Kalibrieren eines Fahrzeugbremsprüfstandes, bei der an einem Fahrzeug eine Prüfachse (2) mit zwei Rädern (1) vorhanden ist, an der wenigstens ein Rad mit einer als Radbremse ausgebildeten Meßbremse versehen ist, die mit einer Anzeigeeinrichtung für die jeweils wirksame Radbremskraft in Verbindung steht und bei der der Bremssattel (4) der Meßbremse an einem fest mit der Achse (2) verbundenen Träger (5) angeordnet ist, wobei der Träger als Kraftmeßeinrichtung derart ausgebildet ist, dass durch ihn die Reaktionskräfte der Meßbremse über elastische Verformungen des Trägers (5) als Bremskraft erfassbar sind.

2. Einrichtung nach Anspruch 1, wobei der Träger (5) mit einer Anordnung (17) zur Erfassung kraftabhängiger Formänderungen versehen ist, die als Dehnmeßeinrichtung (17) ausgebildet ist, mit der die Verformungen des Trägers (5, 16) als Bremskraft erfassbar sind.

3. Einrichtung nach Anspruch 1 oder 2, wobei der Träger (5) mit einer Anordnung (17) zur Erfassung kraftabhängiger Formänderungen versehen ist und in dem Bereich, in dem er mit dieser Anordnung (17) versehen ist, in bezug auf die Krafteinleitung durch den Bremssattel (4) als Biegebalken und/oder als Zug-Druckkörper und/oder als Torsionskörper ausgebildet ist.

4. Einrichtung nach einem der Ansprüche 1 bis 3, wobei das mit der Meßbremse versehene Rad (1) mit einer Bereifung mit hoher Haftfähigkeit und geringer Verformbarkeit versehen ist.

5. Einrichtung nach einem der Ansprüche 1 bis 4, wobei bei einem zweiachsigen Fahrzeug (F) eine mit den Meßbremsen versehene Prüfachse (P) vorhanden ist, die relativ zum Fahrzeug (F) zwischen den beiden Fahrzeugachse bewegbar angeordnet ist und nur für den Kalibriervorgang über einen Stellantrieb mit dem Prüfstand in Berührung bringbar ist.

## Claims

1. Mobile device to calibrate a vehicle brake bench comprising one vehicle fitted with a test axis (2) with two wheels (1), at least one of those wheels being provided with a measuring brake formed as a wheel brake, which is connected with a telltale to indicate the corresponding effective wheel brake force, and whereby the brake calliper (4) of the measuring brake is arranged at a carrier (5), which is firmly connected with the axis (2), whereby the carrier is designed as a force-measuring device in a way that it can measure the reaction forces of the measuring brake as brake force by analysing the elastic deformations of the carrier (5).

2. Device according to claim 1, whereby the carrier (5) is provided with an arrangement (17) to measure force-dependent deformations being designed as a strain measuring device (17) for the measurement of deformations of the carrier (5, 16) as brake force.

3. Device according to claim 1 or 2, whereby the carrier (5) is provided with an arrangement (17) to measure force-dependent deformations and is in that region, in which it is provided with said arrangement (17), formed as a bending beam and/or as compression-tension body and/or as torsion body with reference to the introduction of force via the brake calliper (4).

4. Device according to one of the claims 1 to 3, whereby the wheel (1) provided with the measuring brake is equipped with a tire of high adhesion and low deformability.

5. Device according to one of the claims 1 to 4, whereby in case of a biaxial vehicle (F) a testing axis (P) fitted with said measuring brakes is provided, which is arranged movably and relatively to the vehicle (F) between the two vehicle axes and can only get in touch with the test bench by means of an actuator in order to carry out the calibrating procedure.

## Revendications

1. Dispositif mobile pour calibrer un banc d'essai de freins de véhicule, dans lequel est présent, sur un véhicule, un essieu d'essai (2) avec deux roues (1), sur lequel au moins une roue est munie d'un frein de mesure conçu en tant que frein de roue, qui est en liaison avec un dispositif d'affichage de la force de freinage de roue respectivement efficace, et dans lequel l'étrier de frein (4) du frein de mesure est disposé sur un support (5) relié à demeure à l'essieu (2), le support étant configuré comme dispositif de mesure de force de telle sorte qu'il permet de mesurer en tant que force de freinage les forces de réaction du frein de mesure à l'aide de déformations élastiques du support (5).

2. Dispositif selon la revendication 1, le support (5) étant muni d'un ensemble (17) pour détecter des changements de forme dépendant de forces, qui est configuré en tant que dispositif de mesure d'allongement (17) permettant de mesurer en tant que force de freinage les déformations du support (5, 16).

3. Dispositif selon la revendication 1 ou 2, le support (5) étant muni d'un ensemble (17) pour détecter des changements de forme dépendant de forces et, dans la zone dans laquelle il est muni de cet ensemble, ledit support étant configuré en tant que barre de flexion et/ou corps de traction/pression et/ou corps de torsion en fonction de la transmission de forces par l'étrier de frein (4).

4. Dispositif selon l'une quelconque des revendications 1 à 3, la roue (1) munie du frein de mesure étant équipée d'un pneumatique à adhésivité élevée et à faible déformabilité.

5. Dispositif selon l'une quelconque des revendications 1 à 4, pour un véhicule (F) à deux essieux, dans lequel est présent un essieu d'essai (P) muni des freins de mesure, qui est disposé de manière mobile par rapport au véhicule (F) entre les deux essieux de véhicule et qui peut être mis en contact avec le banc d'essai que par un mécanisme de commande pour réaliser uniquement l'opération de calibrage.
